# EUROPEAN PATENT APPLICATION

(11) **EP 4 815 403 A1**
(43) Date of publication of application: **30.09.2026**
(21) Application number: 25166135.1
(22) Date of filing: 25.03.2025
(51) Int. Cl.: H04L 61/4511

(54) **METHOD AND SYSTEM FOR MONITORING USAGE OF APPLICATIONS ON USER DEVICES**

(71) Applicant: Nagravision Sàrl, 1033 Cheseaux-sur-Lausanne (CH)
(72) Inventor: BIEBER, Yann, 1033 Cheseaux-sur-Lausanne (CH)
(74) Representative: Novagraaf International SA

(57) **Abstract**

The present disclosure provides a computer-implemented method for monitoring application usage on at least one user device (700_1, 700_2, 700_3). The method includes receiving DNS queries for domains sent from the at least one user device (700_1, 700_2, 700_3) to a Domain Name System (DNS) server (100), recognizing at least one application by analyzing the received DNS queries, and executing an aggregation process of the DNS queries from the at least one user device for the recognized application to identify at least one application session on the at least one user device. The aggregation process takes as input a value of cache duration for DNS records returned by the DNS server (100) in response to the DNS queries. The method may further include setting the returned value of the cache duration for the DNS record to be shorter than a default value of cache duration for said DNS record within the DNS server (100).

## Description

### FIELD OF INVENTION

The present disclosure relates to a method and system for monitoring application usage on user devices.

### BACKGROUND

Monitoring application and websites usage on user devices can be used for various purposes, including targeted advertising, employee productivity analysis within organizations, parental control, user experience optimization, network management, etc. Several methods have been developed to track and analyze user behavior across different applications and websites.

A known approach is based on the use of trackers, typically in the form of cookies, distributed by web platforms and stored on user devices' browsers. When a user device visits a website, these trackers are sent back to a tracking service provider, enabling user profiling, which refers to the process of collecting and analyzing data about the user's activity across applications and websites to create a user profile. However, this method relies on collaboration from visited websites and/or online applications and may not provide a comprehensive view of user activity across all applications. Such approach is typically used by advertisement providers across thousands of websites or applications.

Another known method, called Deep Packet Inspection (DPI), may be implemented by an Internet Service Provider (ISP) and/or a network operator. This technique involves analyzing all Internet traffic from user devices, including both unencrypted and encrypted data, using for example a dedicated appliance analyzing all traffic that passes through at least part of the operator's network, to identify the user's online activity. While technically feasible, DPI is resource-intensive to implement and may raise privacy issues.

These existing solutions face several challenges. The tracker-based monitoring approach relies on the collaboration of websites and online applications with the tracking service provider and may not be precise until a sufficient number of websites or applications integrate the system. The DPI-based approach can be complex to profile users accurately, as more internet traffic becomes encrypted. Another issue of the DPI-based approach is that it is limited to tracking user using a specific network.

Furthermore, current methods often compute aggregated user profile information but fail to track the time spent on different websites or applications precisely. Another limitation is the difficulty in individually tracking the online activity of multiple devices (e.g., smartphone, connected TV, tablet, etc.) within a local area network (LAN), such as a home network.

Therefore, a more efficient application usage monitoring system is needed that overcomes one or more of these problems.

### SUMMARY

This Summary is provided to introduce a selection of concepts in a simplified form that are further described below in the Detailed Description.

In a first aspect, a computer-implemented method for monitoring application usage on at least one user device is provided. The method includes receiving DNS queries for domains sent from said at least one user device to a Domain Name System, DNS, server; recognizing at least one application by analyzing the received DNS queries; and for the recognized application, executing an aggregation process of the DNS queries from said at least one user device for said recognized application to identify at least one application session on the at least one user device, wherein the aggregation process takes as input a value of cache duration for DNS records returned by the DNS server in response to the DNS queries.

This method enables efficient monitoring of application usage patterns by leveraging DNS traffic analysis, providing insights into user behavior without requiring deep packet inspection or access to encrypted application data. The use of DNS query aggregation allows for the identification of distinct application sessions, offering a more granular understanding of application usage over time. The DNS-based approach allows tracking users, or groups of users, independently of the network connection they use.

The method may further include setting the returned value of the cache duration for the DNS record to be shorter than a default value of cache duration for said DNS record within the DNS server.

By shortening the cache duration, the method increases the frequency of DNS queries, allowing for more accurate and timely tracking of application usage.

The method may involve recognizing at least one application using a mapping database containing, for each of a plurality of applications, associated domains used by said application.

Utilizing a mapping database enhances the accuracy of application recognition, enabling the system to identify a wide range of applications based on their associated domain queries. This mapping database can be regularly updated.

The method may further comprise a step of building and/or updating the mapping database by testing the plurality of applications using a testing device and, for each application under testing: receiving the DNS queries sent from the testing device to the DNS server; determining the domains used by said application by analyzing the DNS queries received from the testing device; and associating the determined domains with said application in the mapping database.

This automated process for building and updating the mapping database ensures that the system remains current with the latest applications and their associated domains. It reduces manual effort and improves the overall accuracy of application recognition.

The method may involve testing the plurality of applications on the testing device through an online application testing platform.

The method may include an aggregation process that aggregates at least two DNS queries successively received from said at least one user device for said recognized application if the subsequent DNS query is received within a predetermined time interval following the preceding DNS query, said time interval being based on the first value of cache duration.

This aggregation process enables the system to accurately identify continuous application sessions, distinguishing between active usage periods and idle times. It provides a more nuanced understanding of user engagement with applications.

The predetermined time interval may be based on the value of cache duration, as returned by the DNS server and increased by a predetermined tolerance value.

Adding a tolerance value to the cache duration when determining the aggregation time interval accounts for example for potential network delays or variations in DNS query timing. This approach improves the robustness of session identification, reducing false negatives in detecting continuous application usage.

The aggregation process may generate a new application session based on the DNS queries received from the at least one user device for said recognized application if a subsequent DNS query is received later than the predetermined time interval allowed after a preceding DNS query.

This feature allows the system to distinguish between separate usage sessions of the same application, providing insights into user behavior patterns such as frequency of application launches and typical session durations.

The method may further comprise a step of identifying a source of each of the received DNS queries based on information in the DNS queries including at least one of a public network address, a MAC address, and a specific DNS address.

Identifying the source of DNS queries enables the system to associate application usage with a specific device or group of devices, allowing for more personalized or detailed analytics.

The method may involve identifying at least one application session for the recognized application by determining information on time and duration of use of said application.

This provides data on user engagement, allowing for analysis of peak usage times, session lengths, and overall application popularity.

The method may further comprise a step of selectively adjusting the returned value of cache duration value based on at least one criteria of the group including a specific application, a specific user device, and a desired level of granularity for application usage monitoring.

This adaptive approach to cache duration allows for fine-tuning of the monitoring process.

The method may comprise the step, performed by the DNS server, of: sending a query for a domain to at least one other DNS server of a DNS system, receiving in return a DNS record for the queried domain including a default value of cache duration for said DNS record, caching the DNS record in the DNS server, and, after expiration of the default value of cache duration, sending a new query for said domain to the at least one other DNS server, the default value of cache duration determining a caching time limit for the DNS server before a new query to the at least one other DNS server is required.

In a second aspect, a computing device for monitoring application usage on at least one user device is provided. The computing device includes a receiver for receiving DNS queries for domains sent from said at least one user device to a Domain Name System, DNS, server; a recognition module for recognizing at least one application by analyzing the received DNS queries; an aggregation module configured to execute an aggregation process of the DNS queries for the recognized application, received from the at least one user device, the aggregation process taking as input a value of cache duration for DNS records returned by the DNS server in response to the DNS queries; and a session identification module configured, for the recognized application, to identify at least one application session on the at least one user device based on the aggregated DNS queries.

In a third aspect, a system comprising a DNS server, the computing device of the second aspect, and a mapping database containing, for each of a plurality of applications, associated domains used by said application, is provided. The system is configured to execute the steps of the method described in the first aspect.

This integrated system combines the DNS server, computing device, and mapping database to provide a complete solution for application usage monitoring. It offers a scalable and adaptable platform that can be deployed by network administrators, ISPs, or application developers to gain valuable insights into user behavior and application performance.

In a fourth aspect, a non-transitory computer-readable storage medium storing instructions that, when executed by a processor, cause the processor to perform the method described in the first aspect is provided.

### BRIEF DESCRIPTION OF FIGURES

Embodiments of the invention will be described, by way of example, with reference to the following drawings, in which:
FIG. 1 illustrates a block diagram of a monitoring system for analyzing application usage on devices, according to aspects of the present disclosure.
FIG. 2 illustrates a flowchart of a TTL management method for managing DNS record time-to-live values, according to an embodiment.
FIG. 3 illustrates a flowchart of a method for monitoring application usage on user devices, according to an embodiment.
FIG. 4 illustrates a flowchart of a method for aggregating DNS queries to determine application sessions, according to an aspect of the present disclosure.
FIG. 5 illustrates a flowchart of a method for building a domain database associating applications with domain names, according to an embodiment.
FIG. 6 illustrates a block diagram of an analysis module for monitoring application usage through DNS traffic analysis, in accordance with an embodiment.
FIG. 7 shows an illustrative example of a timeline of application sessions on different user devices.

Common reference numerals are used throughout the figures to indicate similar features.

### DETAILED DESCRIPTION

The present invention relates to a monitoring system and method. The monitoring method utilizes DNS query analysis and DNS query aggregation.

The monitoring method comprising the steps of
- receiving DNS queries for domains sent from at least one user device - from an individual device or a group of devices - to a Domain Name System, DNS, server;
- recognizing at least one application or service by analyzing the received DNS queries;
- for the recognized application or service, executing an aggregation process of the DNS queries from said at least one user device for said recognized application or service,
- determining characteristics of the at least one user device (e.g., characteristics of application or service usage on the at least one user device, or device's characteristics such as the device's OS, manufacturer, model, etc.) based on the aggregated DNS queries.

The monitoring method utilizes DNS query analysis, application recognition, and DNS query aggregation.

In a first embodiment, the monitoring method may enhance monitoring of online application usage on user devices through DNS (Domain Name System) traffic analysis. This system provides an accurate monitoring, enabling determination of which applications are used on each user device and of the time periods (start time, duration, end time) of using these applications.

In the first embodiment, the monitoring method may further include application recognition and identification of application sessions to profile the user devices, i.e., to provide characteristics of application usage on user devices. These characteristics may include, but are not limited to: the specific application(s) used on the user devices and the time periods or sessions when these applications are accessed and used on the user devices. Application usage characteristics may be analyzed at the level of individual user devices.

As used herein, the term "online applications", or "applications", refers to software programs or services that can be accessed and used over the internet or a computer network. These applications may include, but are not limited to, web-based services, mobile apps, cloud-based software, streaming platforms, social media platforms, productivity tools, and any other software or service that requires an Internet connection for full functionality. The applications may have components installed both on one or more remote servers or cloud system and on the user devices (e.g., a video editing application might have a client component installed on the user device for basic functions and user interface, while more computationally intensive tasks might be performed on remote servers). Alternatively, the applications may be entirely hosted on one or more remote servers or a cloud system, with the user device accessing and running the application for example through a web browser (e.g., web-based email service, online document editor, etc.). The present monitoring system 500 is designed to track or monitor application usage regardless of the deployment model of the applications. By analyzing DNS queries, it can identify when a user is accessing and/or using a specific application, whether it's partially installed locally or entirely web-based.

In a second embodiment, the monitoring method may include recognition of at least one update application or service and aggregation of DNS queries for the recognized update application or service. An update application or service refers to an application or service responsible for providing updates related to device's software (e.g., Operating System (OS) updates), firmware, and/or hardware (e.g., to change how a hardware component functions) to devices, typically through a communication network. It is for example provided by an update server or cloud system. The aggregated DNS queries may be analyzed to determine characteristics of the requesting device(s) such as the device's OS(s), manufacturer(s) and/or model(s).

### First Embodiment

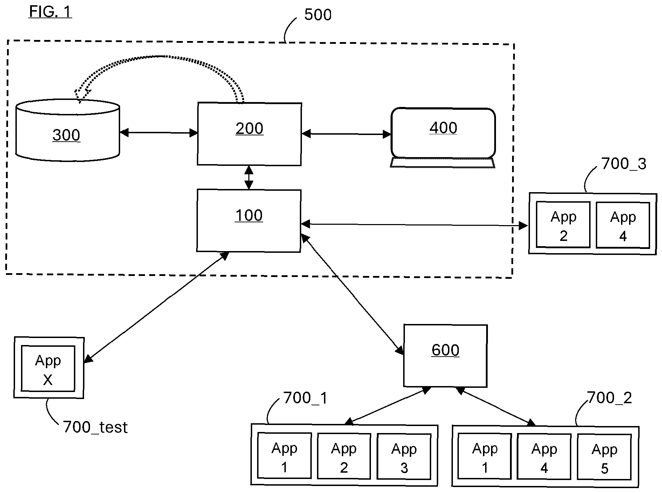

FIG. 1 illustrates a monitoring system 500 for monitoring application usage on user computing devices referred as "700", or "700_n" with n=1, 2, ..., according to the first embodiment. The system 500 comprises several interconnected components. These components include: a DNS server, or "DNS resolver", 100, an analysis module 200, and a mapping database 300. The monitoring system 500 may further include a computing device 400, also referred to as a console, in communication with the analysis module 200.

The DNS resolver 100 is configured to receive and process domain name requests or queries, also referred as DNS queries or DNS requests, from user devices. A "domain name", or "domain ", refers to a human-readable address used to identify websites or other resources on the internet. A main role of the DNS resolver 100 is to translate these domains into corresponding IP addresses that computers, such as the user computing devices 700, can understand and use to locate resources on the internet. As is well known by a person skilled in the art, the DNS resolver 100 has a local cache for storing mappings between domains and their corresponding DNS records. A DNS record may contain an IP address associated with a domain, along with a predefined cache duration, also referred to as TTL (Time-To-Live) in DNS.

The TTL (Time-to-Live) of a DNS record, which typically includes an IP address, defines the duration for which the record remains valid and can be cached (e.g., on a server or a device). Once the TTL expires, the caching server or device must query the DNS for updated information, such as a new IP address and/or TTL value.

The DNS resolver 100 is configured to process the DNS queries received from the user devices 700, either by retrieving the information from its own cache or by forwarding the query to other DNS server(s) in the DNS system or infrastructure (e.g., a root name server, a top level domain, TLD, server, and an authoritative name server), in a known manner.

In an embodiment, the DNS resolver 100 may implement a specialized TTL management process 800 to cause more frequent DNS queries from user devices 700, enabling more granular monitoring of application usage.

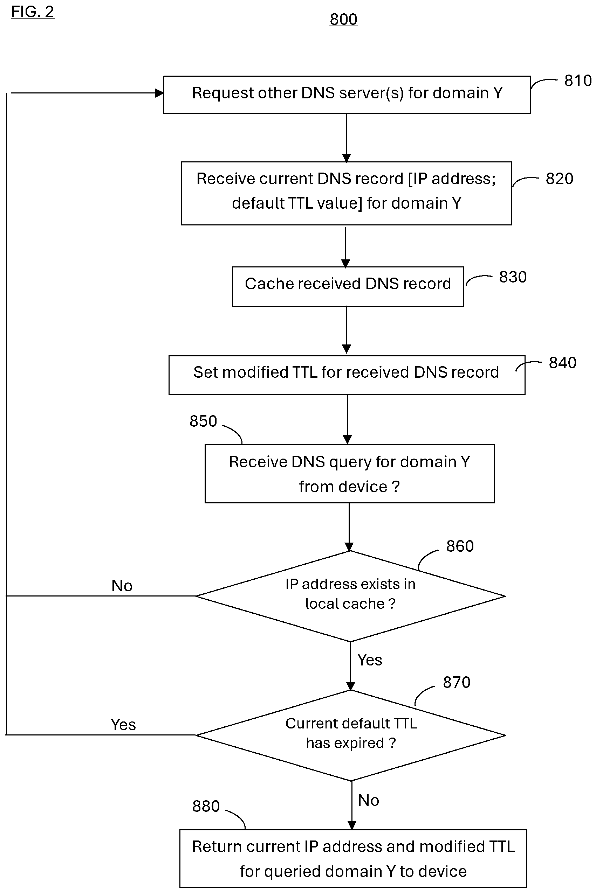

With reference to FIG. 2, the TTL management process 800 may include several steps, described below, for managing TTL, or cache duration, values of DNS records containing IP addresses.

In a step 810, the DNS server 100 queries or requests one or more other DNS servers (e.g., a root name server, a top level domain, TLD, server, and an authoritative name server) in the DNS infrastructure for resolving a domain or domain name "Y". The step 810 may be performed by the DNS server 100 after checking its local cache for a corresponding IP address and determining that the entry does not exist or exists but is no longer valid (due to elapsed TTL). In response, the DNS server 100 receives, from the other DNS server(s), a current DNS record corresponding to the queried domain Y in a step 820. The DNS record typically includes an IP address corresponding to the queried domain Y and a default cache duration value in the form of a TTL value.

In a step 830, the DNS server 100 stores the received IP address and TTL value for the domain Y in its local cache. This TTL value associated with the IP address corresponding to the queried domain, received from the DNS infrastructure (i.e., from the other DNS server(s)), will be referred to as the default TTL value or original TTL value.

The DNS server 100 may set a modified TTL value for the domain Y associated with the received IP address in a step 840. The modified TTL value may be predefined. In a particular embodiment, this modified TTL value may be a reduced, or low, TTL value, that is set shorter than the current default (original) TTL value received from the other DNS server(s) in step 820. For example, if the current default TTL value is 600 seconds, the modified TTL value may be set to 120 seconds. The DNS server 100 may store this modified TTL value in its local cache in association with the cached DNS record containing the IP address and the default TTL value.

In an embodiment, the modified TTL value may be set depending on one or more criteria such as a specific application, a specific user device, and/or a desired level of granularity for monitoring application usage on user devices.

For example, the modified TTL value could be set to a few tens of seconds, for example 60 seconds, for example for tight monitoring of applications, up to several hundred seconds, for example up to 600 seconds, for less important applications. In some aspects, the modified TTL value may be set between 60 seconds and 600 seconds. This may depend on the application, the desired level of granularity for monitoring, and/or the profiled entity. In some cases, the TTL value could be set equal to the original TTL, for example for applications that don't require any specific monitoring.

As shown in FIG. 2, the step 840 may be performed after receiving the current DNS record for the queried domain Y from the other DNS server(s). However, the modified TTL value may be pre-set or predetermined before receiving the DNS records from the other DNS server(s) (step 820).

In a step 850, the DNS server 100 receives a DNS query for the domain Y from a user device 700.

In a step 860, the DNS server 100 checks its local cache for the corresponding IP address (i.e., the IP address associated with the domain Y) and, if the entry exists, a step 870 checks whether the current default, original, TTL value has expired.

If the entry (i.e., the IP address corresponding to the queried domain Y) does not exist (step 860: No), or if the entry exists but its default TTL value has expired (step 870: Yes), the method 800 goes to the step 810, where the DNS server 100 queries for an update of the DNS record by sending a request for the domain Y to the other DNS server(s) in the DNS infrastructure.

If the entry exists (step 860: Yes) and the default TTL value has not expired (step 870: No), the DNS server 100 responds to the querying user device 700 by sending back the corresponding IP address, currently valid, along with the modified (low) TTL value, rather than the default (original) TTL value, in a step 880.

The returned value of the cache duration determines a caching time limit for the user device 700 of said DNS record before a new DNS query is required (i.e., the returned value of the cache duration for a DNS record determines how long the user device 700 can cache the DNS record before querying for an update).

The DNS server 100 applies a low caching control policy for the user devices 700 by modifying the TTL to a low value, for example 2 minutes. This approach ensures that the user devices 700 send new DNS queries frequently, due to the low TTL. The more frequent DNS queries from the user devices 700 to the DNS resolver 100 provide a higher resolution of data for monitoring application usage patterns on user devices 700, as will be explained later. By manipulating the TTL values in this manner, the DNS server 100 creates a balance between maintaining efficient DNS caching in its local cache and enabling detailed application usage tracking without requiring deep packet inspection or relying on website or application collaboration for user profiling.

In an embodiment, the DNS resolver 100 is further configured to forward the DNS queries received from the user devices 700 to the analysis module 200 for further processing, as will be described later in more detail.

The mapping database 300 contains a list of online applications and, for each application, a plurality of associated domains used by this application. This database 300 serves in application recognition that is a process allowing the analysis module 200 to identify the applications used by the user devices 700 based on the DNS traffic. The associated domains for each application may include primary domains owned by application providers, as well as secondary domains related to content delivery networks (CONs), cloud services, or other third-party services or resources utilized by the application. For example, a social media application might have its main domain (e.g., "socialmedia.com") as well as several associated domains for image hosting, video streaming, and analytics.

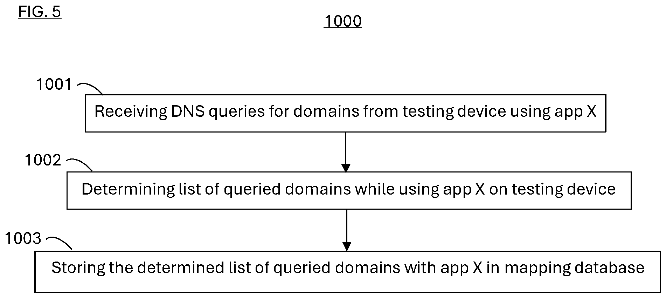

The mapping database 300 may be built through various methods. FIG. 5 illustrates a process 1000 of building the mapping database 300 according to a particular embodiment.

As shown in FIG. 5, the process 1000 begins with a step 1001 of receiving DNS queries for domains from a testing device 700_test using a specific application (e.g., app X). The testing device 700_test may be part of a device farm, which is an infrastructure that allows automated testing of applications on a variety of real or virtual devices. In this way, the testing of applications is performed through an online application testing platform or service. The DNS server 100 may receive these DNS queries and forward them to the analysis module 200 for processing.

In a step 1002, the method 1000 determines a list of queried domains while the specific application (e.g., app X) is being used on the testing device 700_test. This step 1002 may be performed by the analysis module 200 using the DNS queries received from the testing device 700_test via the DNS server 100.

In a step 1003, the determined list of queried domains associated with the specific application, for example "app X", is stored in the mapping database 300, which contains a list of applications or services, each associated with a list of domains that this application is likely to use.

By utilizing a device farm, the process of profiling applications (i.e., of determining the domains queried by the applications) can be automated. However, alternatively, this process of profiling applications may be performed manually by an operator with a real device testing applications under control of the operator.

The method for building domain database 1000 may be repeated for multiple applications to populate the mapping database 300 with information on the domains queried by these applications.

In some aspects, the mapping database 300 may be periodically updated to reflect changes in application behavior or to add new applications, for example by running the process 1000 regularly and/or in response to a release of new versions of applications.

The DNS resolver 100 is in communication with user devices 700, as shown in FIG. 1. This communication allows the DNS resolver 100 to receive and process DNS queries from the user devices 700 when they access and use online applications or services.

When an application used on the user device 700 needs to access an online resource located by a domain name, the user device 700 may first check its local cache for this domain name. If the domain name is not found in the user device 700's local cache, or if it is found but associated with an expired IP address due to an elapsed TTL, the user device 700 may send a DNS query to the DNS resolver 100. This query aims to translate the domain name into a corresponding IP address. The DNS resolver 100 then processes the query, either by retrieving the information from its own cache or by forwarding the query to other DNS server(s) in the DNS hierarchy. After obtaining the required IP address, the DNS resolver 100 sends this information back to the requesting user device 700, along with a modified TTL value as described earlier. If the modified TTL value is low, it forces the user device 700 to frequently send DNS queries to the DNS resolver 100 while the application is being used on this user device 700. This exchange of DNS queries and responses between the DNS resolver 100 and the user devices 700 may form the basis for the application usage monitoring system, as it provides data for the analysis module 200 to identify and track application usage patterns on individual user devices.

As an illustrative and non-limitative example, FIG. 1 shows a first, second and third user devices 700_1, 700_2, 700_3, in communication with the DNS resolver 100. In some aspects, the applications App 1, App 2 and App 3 may be used on the device 700_1, the applications App 1, App 4 and App 5 may be used on the device 700_2, and the applications App 2 and App 4 may be used on the device 700_3.

The analysis module 200 is responsible for analyzing the DNS traffic received from the user devices 700 (i.e., processing the DNS queries sent by user devices 700 to the DNS resolver 100) to recognize an application or service and, for the recognized application or service, executing an aggregation process of the DNS queries for said recognized application or service transmitted by a user device or a group of user devices, and determining characteristics of the user device(s) based on the aggregated DNS queries.

In the first embodiment, the analysis module 200 is responsible for monitoring, for an individual user device 700 or a group of user devices 700, which specific applications are used on the user device(s) 700 and the time periods or sessions during which these applications are accessed and used.

The analysis module 200 may be implemented with hardware and software.

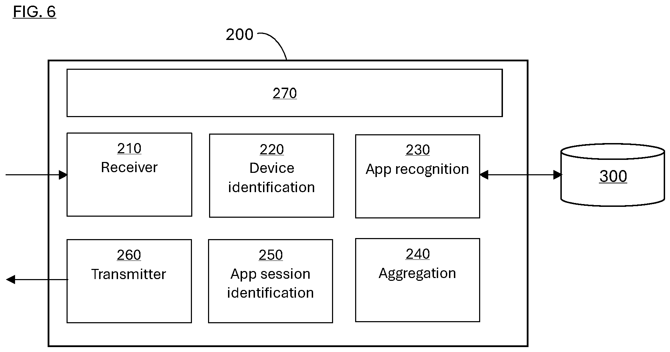

The analysis module 200 may have various functional modules, as shown in FIG. 6:
- a source identification module 220 configured to associate each DNS query with a source that may include an individual user device 700 or a group of user devices 700, enabling monitoring of application usage individually on the user device 700 or globally on the user devices of the group. This can be achieved by analyzing source information present in the DNS queries, as explained later in more detail.
- an application recognition module 230: using the mapping database 300, this module 230 is configured to map the domains in the DNS queries to known applications or services, allowing it to recognize which applications or services are being used on each user device 700.
- an aggregation module 240 configured to implement an aggregation process to group related DNS queries.

In the first embodiment, the aggregation process executed by the aggregation module 240 takes into account the modified TTL value set by the DNS resolver 100, which ensure frequent DNS queries from user devices 700, as will be described later.

In the first embodiment, the analysis module 200 may further include a session identification module 250 configured, based on the aggregated DNS queries, to identify and track application sessions on an individual user device 700 or on user devices 700 of a group of devices. This includes determining timing information such as the start time, duration and/or end time of each application session.

Furthermore, the analysis module 300 comprises:
- a receiver 210 configured to receive, or acquire, DNS queries received from the user devices 700 by the DNS resolver 100; and
- a transmitter 260 configured to transmit monitoring data to the console 400 for further analysis, visualization, and/or reporting.

The monitoring data transmitted to the console 400 may be raw data or processed data. Indeed, in some cases, the analysis module 200 may be configured to process the raw monitoring data and generate information about application usage patterns on each user device 700.

Another component of the analysis module 200 may be a processor 270, to which the various components 210, 220, 230, 240, 250, and 260 may be connected. This processor 270 is configured to control the operation of these components.

The analysis module 200 may be hosted in a server or cloud system in communication with the DNS server 100. Alternatively, the analysis module 200 may be part of the DNS server 100.

By controlling these components 210, 220, 230, 240, 250, 260, the analysis module 200 enables the monitoring system 500 to provide accurate, real-time information related to application usage across multiple user devices 700, without relying on deep packet inspection or collaboration from individual applications or websites.

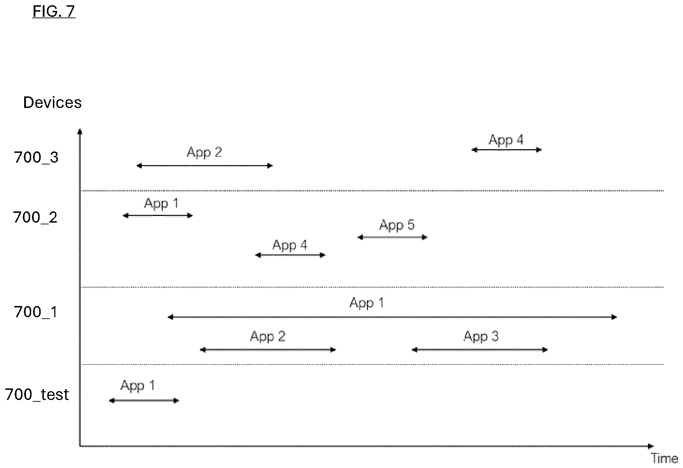

The computing device or console 400, in communication with the analysis module 200, is provided with a user interface system. The computing device 400 may be a computer, laptop, tablet, smartphone, or similar device. It allows an operator to interact with the analysis module 400 to manage the mapping database 200 and/or obtain monitoring data on application or service usage across user devices 700. The console 400 may be configured to process monitoring data received from the analysis module 200 to generate reports and visualizations of usage patterns, aggregate data over time periods, identify trends, detect anomalies, generate user profiles, and provide filtering and export capabilities. For example, the console 400 may be configured to generate a timeline of application usage for each user device, as illustrated in FIG. 7. This processing allows the console 400 to provide information to an operator, a device and/or a system, for purposes such as network optimization, targeted marketing, or user behavior analysis.

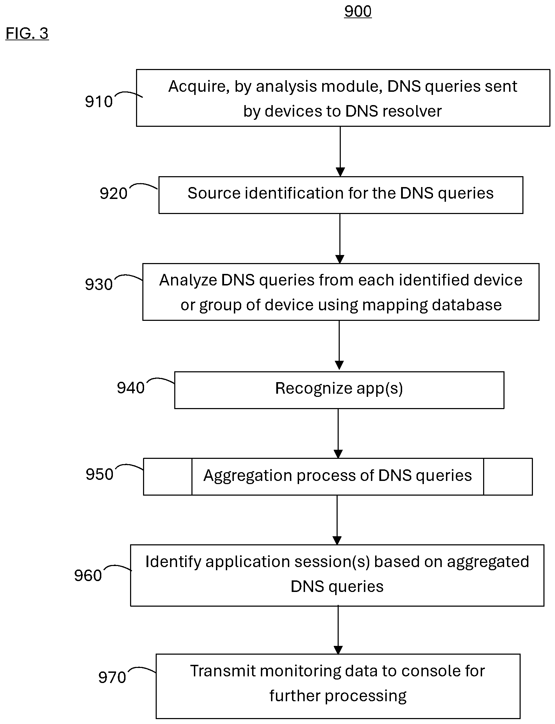

The monitoring system 500 implements a method 900 for monitoring application usage on user devices 700. FIG. 3 illustrates a flowchart of this method 900, according to an embodiment.

The method 900 begins with a step 910 where the analysis module 200 acquires DNS queries sent by the user devices 700 to the DNS resolver 100. For example, the DNS resolver 100 receives these DNS queries from the user devices 700 and forwards them to the analysis module 300 in real-time or by including timestamp information (indicating when the queries are received by the DNS server 100).

After acquiring the DNS queries, the method 900 includes a step 920 of identifying a source of each of the plurality of received DNS queries. This step 920 associates each DNS query with a source that can be either an individual user device 700 or a group of user devices 700. This association allows for monitoring of application usage for the identified individual device 700 or group of devices 700. The identification may be based on information present in the DNS queries, such as:
a) a source network address like a public IP address;
b) an association of a source network address like a public IP address - that may be assigned to a LAN router identifier - and a MAC address; or
c) a unique, specific, DNS address.

In the case a), the source network address (e.g., public IP address) may be assigned to a user device 700 or a group of user devices 700. This group of devices may share the same network address. For example, this group of devices may refer to a plurality of devices connected to a Local Area Network (LAN) router or to a plurality of sub-groups of devices respectively associated with a plurality of LAN routers, where each sub-group refers to a plurality of devices connected to one Local Area Network (LAN) router.

In the case b), the association of the source network address (e.g., IP address) and MAC address allows to identify an individual user device for example connected to a LAN. The source network address may correspond to the network address of a LAN router to which the user device with the MAC address is connected. Alternatively, any other unique identifier identifying the user device may be used rather than the MAC address.

In the case c), the specific DNS address may be uniquely assigned to a use device or group of devices and configured in these device(s) so that, when the device(s) send DNS queries to the DNS server, this specific DNS address is used as target or recipient address. This allows to identify the device or group of devices based on the specific DNS address included in the DNS queries.

The source information - source network address, the MAC address and/or the unique DNS address - may be included in one or more appropriate part(s) of the DNS query, such as a header or a payload.

Optionally, a DNSmask configuration, or any other equivalent tool adapted to add metadata in DNS queries, may be installed in the LAN router 600 to allow the identification of user devices 700 connected to this LAN router 600. This configuration may enable the LAN router 600 to tag or modify the DNS queries from the user devices 700 of the LAN with information that can be used to individually identify the specific user device 700 making the query. The DNSmask configuration may be useful because it allows the monitoring system 500 to distinguish between different devices on the same local network, even if they share a common external IP address. This capability may be particularly used in home or small office networks where multiple devices connect through a single router. By enabling unique device identification, the DNSmask configuration may allow for more accurate and granular monitoring of application usage patterns across different devices within the same network. However, this configuration is optional in the present disclosure.

The method then proceeds to step 930 to analyze the DNS queries from the identified user device or group of user devices for application recognition. This step 930 is achieved using the mapping database 300. As previously explained, this database 300 contains associations or mapping between applications and their corresponding domains, enabling recognition of applications based on the domains queried.

Based on the results of this analysis in step 930, the method recognizes applications used by the user device 700 or group of user devices 700 in step 940. The recognition process matches the domains in the DNS queries to applications (listed in the mapping database 300).

Following application recognition, the method 900 performs an aggregation process of the DNS queries in step 950. This aggregation groups related DNS queries to identify distinct application usage sessions for each identified user device 700 or group of user devices 700.

As used herein, the "application usage session" or "application session" refers to a period of time during which a specific application is actively used on a device or a group of devices 700. An application session begins when the application is launched or accessed and ends when the application is closed, terminated, or becomes inactive for a predetermined period of time. The duration and timing of an application session is determined through analysis and aggregation of DNS queries associated with domains used by the application. Multiple concurrent application usage sessions may occur on a device or group of devices 700 when multiple applications are used simultaneously.

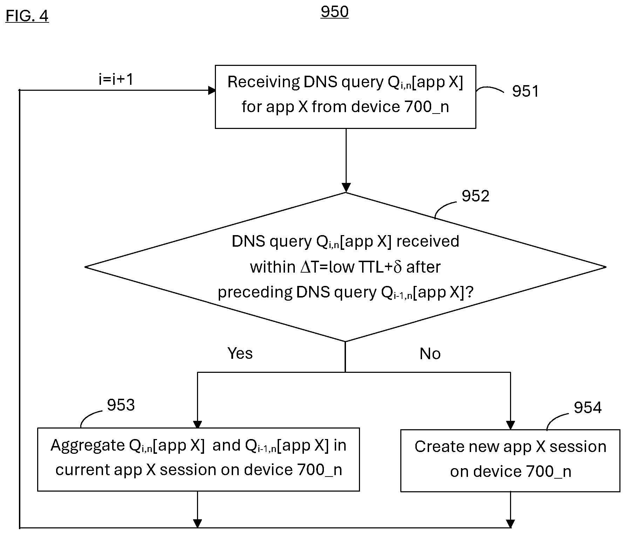

The aggregation process takes into account the value of cache duration (or TTL) for IP addresses, as returned by the DNS resolver 100 to the user device 700 in response to the DNS queries, that is the modified TTL value in some aspects. It will be described later in more detail with reference to FIG. 4.

The method then identifies application sessions on the user device 700 in step 960, based on the aggregated DNS queries from the step 950.

Finally, in step 970, the method 900 may transmit monitoring data to the console 400 for further processing. This monitoring data may include information about the specific applications used by an individual user device 700 or a group of user devices 700 and information on the application sessions identified for this individual user device 700 or group of user devices (e.g., start time, end time and/or duration). The console 400 may use the monitoring data to generate application session timelines as shown in FIG. 7 or perform other analyses, as previously explained.

The steps 910 to 970 may be performed by the analysis module 300.

FIG. 4 illustrates a flowchart of the aggregation process 950 for aggregating DNS queries to identify application sessions for an individual user device or a group of user devices 700, according to an embodiment. The process 950 may be implemented by the analysis module 200 as part of the step 950 of the method 900 shown in FIG. 3.

The process 950 begins with a step 951 of receiving a DNS query for an application X from the individual user device or from any user device belonging to the group of user devices. For the sake of clarity, the requesting device or group of devices will be referred as "700_n". This DNS query can be designated "Q_i,n[app X]", where "i" represents the index of the successive queries sent by the individual user device or any user device from the group of user devices, 700_n, to the DNS resolver 100 for domains queried when using the application app X.

In a step 952, the process 950 determines whether the DNS query Q_i,n[app X] was received by the DNS server 100 within a predetermined time interval ΔT after a preceding DNS query Q_i-1,n[app X].

The time interval ΔT may be set based on the TTL value returned by the DNS resolver 100 (typically in response to the DNS queries sent by the user device 700_n when using the application X). As previously explained, the returned TTL value may be low, set to be shorter than a default (original) TTL value (typically used as cache duration within the DNS resolver 100). In an embodiment, the time interval ΔT may be set to this modified TTL value increased by a predetermined tolerance value. The predetermined tolerance value may account for network delays or processing time. For example, if the low TTL value is set to 3 minutes, ΔT may be set to 4 minutes (3 minutes plus a 1-minute delta). This means that if more than 4 minutes elapse between DNS queries for the same application on the same user device, the analysis module 200 may create a new session for that application.

The tolerance value could be set between 10% and 200% of the modified TTL value. It may depend on the application and/or on the TTL value.

If the DNS query was received within the time interval ΔT (step 952: Yes), the process 950 proceeds to a step 953. In the step 953, the current DNS query Q_i,n[app X] is aggregated with the preceding DNS query Q_i-1,n[app X] in a current application session of using the application app X on the user device 700_n. This aggregation indicates or at least suggests that the application app X is still in use on the device 700_n.

If the DNS query Q_i,n[app X] was not received within the time interval ΔT (step 952: No), the method 950 proceeds to a step 954. In the step 954, a new application session for the application app X on the user device 700_n (i.e., on the individual device or on any device belonging to the group of devices) is created. This creation of a new session indicates that there has been a significant gap in the use of application app X on device, suggesting that the previous session has ended and a new one has begun.

After either the step 953 or the step 954, the method 950 returns to the step 951 to process the next DNS query, with an increment of a counter i (i=i+1). This loop continues for each subsequent DNS query received for application app X from the individual device or the group of devices, 700_n.

By using this aggregation process 900, the monitoring system 500 may accurately identify distinct application usage sessions based solely on DNS traffic, without requiring deep packet inspection or cooperation from the applications themselves. This approach provides a balance between granularity of monitoring and efficiency of data processing.

The aggregation process 950 may generate a new application session if a DNS query is received later than a predetermined time interval after the preceding query, where this interval is based on the value of cache duration (TTL) for IP addresses returned by the DNS server 100 in response to the DNS queries from the user devices 700. Advantageously, the returned TTL value is a low value, set by the DNS resolver 100, to ensure frequent DNS queries from user devices 700, allowing for more precise session identification.

The monitoring system 500 may be implemented in various alternative configurations. For example, the DNS resolver may be integrated directly into a network router or gateway device, allowing for more efficient processing of DNS queries and reducing network latency. In another implementation, the analysis module 200 may be distributed across multiple servers or cloud-based resources.

The monitoring system 500 may be adapted for use in corporate environments for example to track employee productivity and application usage patterns. In this context, the system 500 may be integrated with existing network management tools.

Another potential application of the present disclosure is in the field of network security. By analyzing patterns in DNS queries, the system 500 may be able to detect anomalous behavior indicative of malware infections or attempts at data exfiltration.

The monitoring system 500 may also find applications in the telecommunications industry. Internet service providers may use the present disclosure to optimize network resources based on real-time application usage data. This may lead to improved quality of service for end-users and more efficient allocation of network bandwidth.

In the context of digital marketing, the DNS-based monitoring approach may provide information on consumer behavior and application preferences. This information may be used to develop more targeted advertising for example.

The system 500 may be adapted for use in smart home environments, where it may monitor the usage of Internet of Things (IoT) devices and their associated applications. This may help in identifying potential security vulnerabilities or unusual device behavior that could indicate a compromise.

The present disclosure provides a system and method for monitoring application usage on user devices through DNS traffic analysis. This approach offers several advantages over existing monitoring techniques:

The system operates solely on DNS queries, eliminating the need for deep packet inspection or collaboration from individual applications or websites.

By implementing an aggregation process and optionally manipulating TTL values, the system can accurately identify distinct application sessions, including start times, durations, and end times either for an individual device or for a group of devices. This provides detailed information on user behavior and application usage patterns.

The system may distinguish between different devices on the same network, enabling individualized tracking of application usage across multiple devices, for example within a home network.

The present approach is lightweight compared to deep packet inspection methods, making it suitable for monitoring large numbers of devices and applications simultaneously.

The system can be easily updated to recognize new applications or changes in existing applications by updating the mapping database.

The monitoring approach can work across different network types, including home networks, corporate environments, and mobile networks, providing consistent monitoring capabilities regardless of the user's location or network connection.

The system may allow for adjustable granularity of monitoring by modifying TTL values.

Through DNS traffic analysis, this monitoring system provides a powerful, flexible, and non-intrusive method for monitoring application usage across a wide range of devices and network environments.

### Second Embodiment

The monitoring system 500 and the monitoring method of the second embodiment is based on the first embodiment and differs from it by aspects and features described below.

In the second embodiment, the monitoring method may include the steps of :
- receiving DNS queries for domains sent from a user device or a group of user devices to a Domain Name System, DNS, server;
- recognizing at least one update application or service for providing updates related to device's software (e.g., Operating System (OS) updates), firmware, and/or hardware (e.g., to change how a hardware component functions) by analyzing the received DNS queries;
- for the recognized update application or service, executing an aggregation process of the DNS queries transmitted by the user device or group of user devices for said recognized update application or service, for example by aggregating all the DNS queries;
- determining characteristics of the requesting device(s) (i.e., of the individual device or group of devices) such as the device's OS(s), manufacturer(s) and/or model(s) by analyzing the aggregated DNS queries.

In this second embodiment, the monitoring method focuses on analyzing DNS queries related to update applications or services to determine device characteristics. This approach leverages the fact that devices often make DNS queries to update servers or cloud systems for software, firmware, or hardware updates.

The method begins by receiving DNS queries from a user device or group of devices. The monitoring method may associate each received DNS query with a source that can be either an individual user device or a group of user devices.

The received queries are then analyzed to recognize update applications or services. Recognition of the update application or service can be achieved similarly to application recognition by utilizing a mapping database, as described in the first embodiment. This mapping database may contain, for each of a plurality of update applications or services, associated domains used by said update application or service.

Examples of such update services include operating system update services, firmware update services, or hardware driver update services.

Once an update application or service is recognized, the method aggregates the DNS queries related to that service transmitted by the individual user device or group of devices. This aggregation process may involve grouping all queries made to domains associated with the update service over a certain period.

Another step involves analyzing the aggregated DNS queries (e.g., update service, update frequency, and/or other attributes) to determine characteristics of the requesting device(s). This analysis can reveal important information about the device(s), such as:
- Operating System (OS): Frequent queries to specific update domains can indicate the OS running on the device(s). For example, regular queries to "windowsupdate.com" suggest a Windows operating system;
- Manufacturer: Certain update domains are associated with specific device manufacturers. For instance, queries to "update.samsung.com" would indicate Samsung device(s);
- Model: The combination of OS and manufacturer-specific queries, along with queries to particular firmware or driver update domains, can enable to identify the device model(s);
- Hardware components: Queries for specific hardware driver updates can reveal information about the device's internal components.

An analysis module of the second embodiment may include components or modules - typically implemented in hardware and software - configured to achieve the tasks of: source identification, update application recognition, DNS query aggregation, and optionally determination of device's characteristics based on the aggregated DNS queries. This determination may alternatively be performed by a computing device, such as a console, in communication with the analysis module, as described in the first embodiment.

This method provides a non-intrusive way to profile devices based solely on their DNS traffic related to updates. It can be particularly useful for network administrators, security professionals, or service providers who need to understand the characteristics of devices on their network without direct access to the devices themselves.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognize that numerous further modifications and combinations of various aspects are possible. Accordingly, the described aspects are intended to encompass all such alterations, modifications, and variations that fall within the scope of the appended claims.

## Claims

1. A computer-implemented method for monitoring application usage on at least one user device (700_1, 700_2, 700_3), the method comprising the steps of:
- receiving (910) DNS queries for domains sent from said at least one user device (700_1, 700_2, 700_3) to a Domain Name System, DNS, server (100);
- recognizing (940) at least one application by analyzing the received DNS queries;
- for the recognized application, executing an aggregation process of the DNS queries (950) from said at least one user device (700_1, 700_2, 700_3) for said recognized application to identify at least one application session on the at least one user device (700_1, 700_2, 700_3),
wherein the aggregation process (950) takes as input a value of cache duration for DNS records returned by the DNS server (100) in response to the DNS queries.

2. The method according to claim 1, wherein the returned value of the cache duration for the DNS record is set to be shorter than a default value of cache duration for said DNS record within the DNS server (100).

3. The method of claim 1 or 2, wherein recognizing at least one application is performed using a mapping database (300) containing, for each of a plurality of applications, associated domains used by said application.

4. The method according to claim 3, further comprising a step (1000) of building the mapping database (300) by testing the plurality of applications using a testing device (700_test) and, for each application under testing:
- receiving (1001) the DNS queries sent from the testing device (700_test) to the DNS server (100);
- determining (1002) the domains used by said application by analyzing the DNS queries received from the testing device (700_test);
- associating (1003) the determined domains with said application in the mapping database (300).

5. The method according to claim 4, wherein testing the plurality of applications on the testing device (700_test) is performed through an online application testing platform.

6. The method of any of the preceding claims, wherein the aggregation process (950) aggregates (953) at least two DNS queries successively received from said at least one user device (700_1, 700_2, 700_3) for said recognized application if the subsequent DNS query is received within a predetermined time interval following the preceding DNS query, said time interval being based on the first value of cache duration.

7. The method according to the preceding claim, wherein the predetermined time interval is based on the value of cache duration, as returned by the DNS server (100) and increased by a predetermined tolerance value.

8. The method according to any of the preceding claims, wherein the aggregation process (950) generates (954) a new application session based on the DNS queries received from the at least one user device for said recognized application if a subsequent DNS query is received later than the predetermined time interval allowed after a preceding DNS query.

9. The method according to any of the preceding claims, further comprising a step (920) of identifying a source of each of the received DNS queries based on information in the DNS queries including at least one of a public network address, a MAC address, and a specific DNS address.

10. The method according to any of the preceding claims, wherein identifying at least one application session for the recognized application includes determining information on time and duration of use of said application.

11. The method according to any of the preceding claims, further comprising a step of selectively adjusting the returned value of cache duration value based on at least one criteria of the group including a specific application, a specific user device, and a desired level of granularity for application usage monitoring.

12. The method according to any of the preceding claims, comprising the steps, performed by the DNS server (100), of:
- sending (810) a query for a domain to at least one other DNS server of a DNS system,
- receiving (820) in return a DNS record for the queried domain including a default value of cache duration for said DNS record,
- caching (830) the DNS record in the DNS server (100),
- after expiration of the default value of cache duration, sending a new query for said domain to the at least one other DNS server (100), the default value of cache duration determining a caching time limit for the DNS server (100) before a new query to the at least one other DNS server is required.

13. A computing device (200) for monitoring application usage on at least one user device (700_1, 700_2, 700_3) comprising
- a receiver (210) for receiving DNS queries for domains sent from said at least one user device (700_1, 700_2, 700_3) to a Domain Name System, DNS, server (100);
- a recognition module (230) for recognizing at least one application by analyzing the received DNS queries;
- an aggregation module (240) configured to execute an aggregation process of the DNS queries for the recognized application, received from the at least one user device (700_1, 700_2, 700_3), the aggregation process taking as input a value of cache duration for DNS records returned by the DNS server in response to the DNS queries;
- a session identification module (250) configured, for the recognized application, to identify at least one application session on the at least one user device based on the aggregated DNS queries.

14. A system comprising a DNS server (100), the computing device (200) of claim 13, and a mapping database (300) containing, for each of a plurality of applications, associated domains used by said application, the system being configured to execute the steps of any of claims 1 to 12.

15. A non-transitory computer-readable storage medium storing instructions that, when executed by a processor (270), cause the processor (270) to perform the method of any of claims 1 to 12.
